# FASCICULE DE BREVET EUROPEEN

(11) **EP 3 492 806 B1**
(45) Date de publication et mention de la délivrance du brevet: **20.07.2022**
(21) Numéro de dépôt: 18208903.7
(22) Date de dépôt: 28.11.2018
(51) Int. Cl.: F21S 43/19, F21S 43/14, F21S 43/27, F21S 43/20, B60Q 1/26, F21V 19/00, F21W 103/40, F21W 103/45

(54) **DISPOSITIF D'ÉCLAIRAGE ET/OU DE SIGNALISATION DE VÉHICULE AUTOMOBILE**
VORRICHTUNG ZUR BELEUCHTUNG UND/ODER SIGNALISIERUNG FÜR KRAFTFAHRZEUG
LIGHTING AND/OR SIGNALLING DEVICE OF A MOTOR VEHICLE

(30) Priorité: 01.12.2017 FR 1761514
(43) Date de publication de la demande: 05.06.2019
(73) Titulaire: Valeo Vision Belgique, 7822 Meslin l'Evêque (BE)
(72) Inventeur: FORT, Thibaut, 7822 MESLIN L'EVEQUE (BE); ESPITAILLE, Maxime, 7822 MESLIN L'EVEQUE (BE)
(74) Mandataire: Valeo Visibility

(56) Documents cités:
- EP-A1- 2 966 343
- DE-A1- 19 802 923
- DE-A1-102006 002 322
- DE-C1- 19 604 487
- DE-U1-202014 100 946
- US-A1- 2005 270 794
- US-A1- 2011 007 517

## Description

L'invention concerne un dispositif d'éclairage et/ou de signalisation de véhicule automobile.

Le document US 2005/270794 A1 décrit un dispositif lumineux pour véhicule comprenant une pièce optique sur laquelle est maintenu et positionné un circuit imprimé supportant une source lumineuse.

Un dispositif d'éclairage et/ou de signalisation pour véhicule automobile comprend généralement un boitier dans lequel est disposé au moins un module optique et une glace permettant de fermer le boitier et dont au moins une partie est transparente et permet de faire sortir les faisceaux lumineux émis par le module optique.

Le module optique réalise une fonction d'éclairage ou de signalisation qui doit respecter des caractéristiques photométriques précises fixées par la réglementation en vigueur. Afin de pouvoir respecter ces caractéristiques, il est important que les différents éléments constituants le module optique soit assemblés les uns aux autres avec précision. Notamment, le module optique peut comprendre au moins une source de lumière positionnée sur un circuit imprimé et associée à une pièce optique destinée à mettre en forme les faisceaux lumineux issus de la source lumineuse. Le positionnement de la source lumineuse par rapport à la pièce optique doit être précis.

La précision du positionnement du module optique dans le boitier est également primordiale afin de garantir la projection du faisceau lumineux issu du module optique de sorte à ce qu'il soit conforme à la réglementation.

De plus, le véhicule dans lequel est positionné le dispositif d'éclairage et/ou de signalisation est soumis à de nombreuses vibrations lorsqu'il circule. Il faut donc que les différents éléments constituant le module optique soient maintenus en position les uns par rapport aux autres et que le module optique soit maintenu en position dans le boitier.

On connait des dispositifs d'éclairage et/ou de signalisation comprenant un boitier comportant des pions de centrage et un module optique comportant une pièce optique et un circuit imprimé sur lequel est positionnée une source lumineuse et comportant des trous coopérant avec les pions de centrage du boitier. La pièce optique est fixée dans I le boiter et les pions de centrage permettent ainsi de positionner le circuit imprimé par rapport au boitier et donc la source lumineuse par rapport au boitier. Ainsi en positionnant la pièce optique et la source lumineuse par rapport au boitier, elles sont également positionnées l'une par rapport à l'autre.

Cependant, le module optique comporte des composants qui génèrent de la chaleur, comme notamment la source lumineuse. La chaleur générée vient alors chauffer les autres éléments du module optique tel que le circuit imprimé. Dans certaines applications le circuit imprimé est positionné au contact d'une paroi par exemple d'une paroi de fond du boitier, généralement en matière plastique ; il vient donc chauffer cette paroi, ce qui vient la détériorer.

Un but de l'invention est donc de trouver un moyen de positionnement et de fixation d'un module optique dans un boitier précis, fiable tout en limitant l'échauffement du boitier.

A cet effet, on prévoit selon l'invention un dispositif lumineux de véhicule automobile comprenant un logement et un module optique, le module optique comportant un circuit imprimé supportant au moins une source lumineuse sur une de ses faces et une pièce optique destinée à mettre en forme les faisceaux lumineux issus de la source lumineuse,
remarquable en ce que la pièce optique comporte des moyens de maintien du circuit imprimé sur la pièce optique, des moyens de fixation du module optique sur le logement et des moyens de positionnement du circuit imprimé et du logement,
et en ce que le logement comporte des moyens de positionnement complémentaires coopérant avec les moyens de positionnement permettant de positionner le module optique sur le logement, des moyens de fixation complémentaires coopérant avec les moyens de fixation et des entretoises venant supporter le circuit imprimée sur la face opposée à celle où est positionnée ladite au moins une source lumineuse.

Ainsi grâce aux moyens de maintien, aux moyens de fixation et aux moyens de fixation complémentaires, aux moyens de positionnement et aux moyens de positionnement complémentaires le module optique est positionné et maintenu en position avec précision dans le boitier. De plus, grâce aux entretoises, une distance minimale est garantie entre le fond du logement et le circuit imprimé, ce qui permet d'éviter un contact entre le fond du logement et le circuit imprimé et donc d'éviter au circuit imprimer de chauffer le fond du logement et de le détériorer.

Avantageusement, la pièce optique comporte une base transparente monobloc, les moyens de maintien, les moyens de fixation et les moyens de positionnement s'étendant transversalement à partir d'une même première face de cette base. La pièce optique comporte en outre des languettes venues de matière avec la base qui s'étendent transversalement à la base, à la périphérie de la base dans le même sens que les moyens de maintien, les moyens de fixation et les moyens de positionnement.

Alternativement, une partie des moyens de maintien s'étend transversalement à partir de la première face de la base et l'autre partie des moyens de maintien est positionné sur les languettes en s'étendant transversalement à celles-ci.

Avantageusement, les moyens de fixation sont insérés dans les languettes. Selon l'invention, le circuit imprimé comprend des moyens de passage coopérant avec les moyens de positionnement, ce qui permet de positionner le circuit imprimé par rapport à la pièce optique. De préférence, les moyens de positionnement sont des pions ou des tiges. Les moyens de passage sont des trous au travers desquels passent les moyens de positionnement.

Les moyens de passage comprennent un trou circulaire et un trou oblong. Le trou circulaire permet de bloquer la position du circuit imprimé en translation dans le plan du circuit imprimé et le trou oblong permet de limiter les débattements en rotation en association avec le trou circulaire, et évite de sur-contraindre l'assemblage, facilitant ainsi le montage qui se fait selon une direction transversale au plan du circuit imprimé.

Avantageusement, les moyens de positionnement complémentaires sont des cavités aptes à recevoir les moyens de positionnement. Préférentiellement, les moyens de positionnement complémentaires comportent une cavité de contour circulaire ou carré
et une cavité de contour oblong. Les cavités sont alignées avec les moyens de passage selon l'axe transversal au plan du circuit imprimé ce qui permet de faciliter le centrage de la pièce optique sur le logement en évitant une sur-contrainte.

L'association des moyens de positionnement, des moyens de passage et des moyens de positionnement complémentaires permet ainsi de positionner à la fois les différents éléments du module optique, c'est-à-dire, le circuit imprimé et la pièce optique entre eux, et à la fois le module optique par rapport au logement.

Avantageusement, les moyens de maintien comportent au moins un ergot de clippage qui vient au contact du circuit imprimé sur la face opposée à la face où est positionnée la au moins une source lumineuse. Préférentiellement, l'ergot de clippage est issu d'une languette venue de matière avec la base de la pièce optique et s'étend transversalement à la languette vers la base.

Cet au moins un ergot de clippage permet de bloquer la translation du circuit imprimé selon la direction normale au plan dans lequel s'étend le circuit imprimé et dans le sens opposé au sens dans lequel le circuit imprimé est inséré pour être assemblé avec la pièce optique.

Avantageusement, les moyens de maintien comportent au moins une butée de contre-appui venant supporter le circuit imprimé sur la face où est positionnée la au moins une source lumineuse. La au moins une butée de contre-appui bloque la translation du circuit imprimé selon la direction normale au plan dans lequel s'étend le circuit imprimé et dans le sens dans lequel le circuit imprimé est inséré pour être assemblé avec la pièce optique.

Avantageusement, l'ergot de clippage coopère avec la butée de contre appui. Le circuit imprimé est alors maintenu entre l'ergot de clippage et la butée de contre appui, ce qui limite, voire empêche les déplacements du circuit imprimé.

Préférentiellement, la pièce optique comporte trois butées de contre-appui non alignées qui coopèrent chacune avec un ergot de clippage.

Préférentiellement, les butées de contre-appui sont positionnées sur la première face de la pièce optique de sorte que lorsque le circuit imprimé est mis en position, les butées de contre-appui soient positionnées à des endroits où il y a peu de composants électroniques sur le circuit imprimé afin que les butées de contre-appui ne viennent pas en contact avec un composant électronique.

Avantageusement, la pièce optique comporte une butée de contre-appui médiane positionnée sur un axe médian de la pièce optique et deux butées de contre-appui périphériques positionnées à la périphérie de la pièce optique.

Avantageusement, le logement comporte une entretoise médiane positionnée sur un axe médian du logement, et deux entretoises périphériques positionnées à la périphérie du logement.

Avantageusement, la butée de contre-appui médiane et l'entretoise médiane sont alignées selon la direction dans laquelle s'étendent ladite butée de contre-appui médiane et ladite entretoise médiane lorsque le dispositif lumineux est assemblé. L'alignement de la butée de contre-appui médiane et de l'entretoise médiane permet de former un point d'appui lors de l'insertion du module optique dans le logement, ce qui évite de déformer le circuit imprimé et la pièce optique au moment de l'insertion du module optique dans le logement.

Avantageusement, les moyens de fixation comprennent une fenêtre et les moyens de fixation complémentaires comprennent un clip agencé pour s'insérer dans la fenêtre des moyens de fixation. La fenêtre est positionnée sur une languette venue de matière avec la base de la pièce optique et le clip est un élément en saillie du logement.

Selon une autre caractéristique de l'invention, la pièce optique comporte un collimateur positionné sur la première face de la pièce optique apparié avec chacune des au moins une source lumineuse. On entend par apparié qu'à chaque source lumineuse est associé un collimateur. Il y a ainsi autant de collimateur que de source lumineuse.

Avantageusement, la pièce optique comporte une série de motifs appariée à chacun des collimateurs, positionnée sur une deuxième face opposée à ladite première face et apte à répartir les faisceaux lumineux issus de ladite au moins une source. Ainsi, à chacun des collimateurs est associée une série de motifs.

Avantageusement, les motifs sont des cannelures.

Avantageusement, le logement comporte un moyen de montage de connecteur ou d'interface électronique pour relier électriquement des conducteurs ou fiches du circuit imprimé à des moyens de commande du véhicule automobile.

Préférentiellement, le circuit imprimé comporte trois sources lumineuses. Avantageusement, la au moins une source lumineuse est une diode électroluminescente.

Selon une autre caractéristique de l'invention, le dispositif lumineux comporte un boitier et une glace de fermeture. Selon une première variante, le logement est une pièce fixée sur le boitier. Selon une autre variante, le logement est aménagé directement dans la paroi du boitier. Cette variante permet de réduire les coûts et d'avoir une meilleure précision du positionnement du module optique dans le boitier.

Avantageusement, le dispositif lumineux réalise une fonction de feu antibrouillard ou une fonction de feu de recul.

Avantageusement, le dispositif lumineux comporte au moins deux logements recevant chacun un module optique. Le cas échéant, le dispositif lumineux réalise une fonction de feu antibrouillard par l'intermédiaire d'un module optique et une fonction de feu de recul par l'intermédiaire de l'autre module optique.

D'autres caractéristiques et avantages de la présente invention apparaitront plus clairement à l'aide de la description et des dessins parmi lesquels :
la figure 1 est une vue en perspective arrière d'un module optique selon l'invention ;
la figure 2 est une vue en perspective arrière d'un exemple d'une pièce optique d'un premier côté ;
la figure 3 représente en vue frontale l'exemple de la pièce optique représentée à la figure 2 ;
la figure 4 représente un exemple de circuit imprimé selon sa face avant ;
la figure 5 représente un exemple de logement selon l'invention en vue frontale ;
la figure 6 représente un dispositif lumineux comportant un module optique selon l'invention en vue de côté selon une coupe réalisée le long de l'axe VI-VI représenté à la figure 5.

Les directions avant et arrière font référence au sens de propagation de la lumière d'arrière en avant dans le dispositif lumineux.

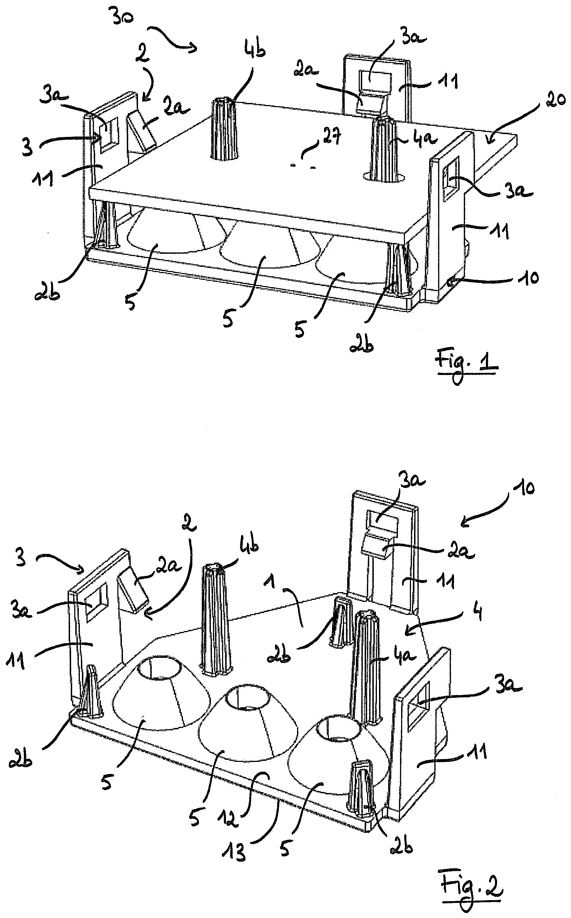

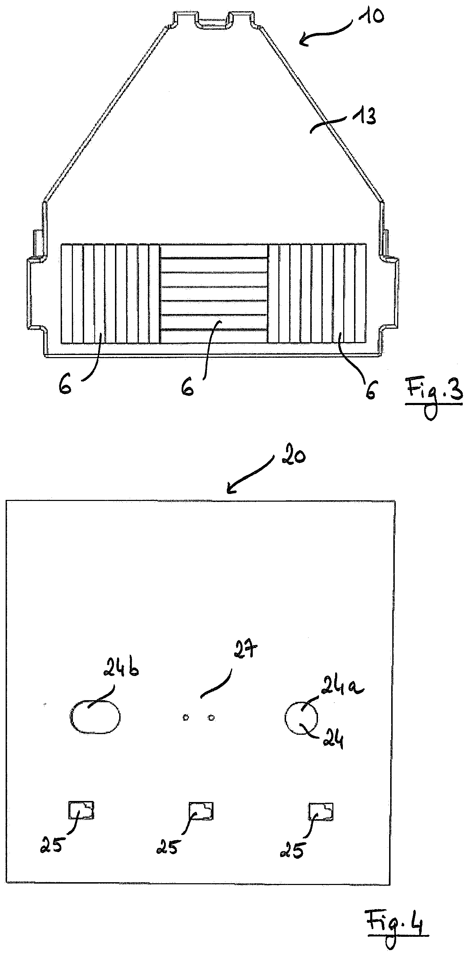

La figure 1 représente un module optique 30. Le module optique 30 comporte une pièce optique 10 et un circuit imprimé 20 qui sont assemblées. La pièce optique 10 est représentée seule aux figures 2 et 3 et le circuit imprimé 20 est représenté seul à la figure 4.

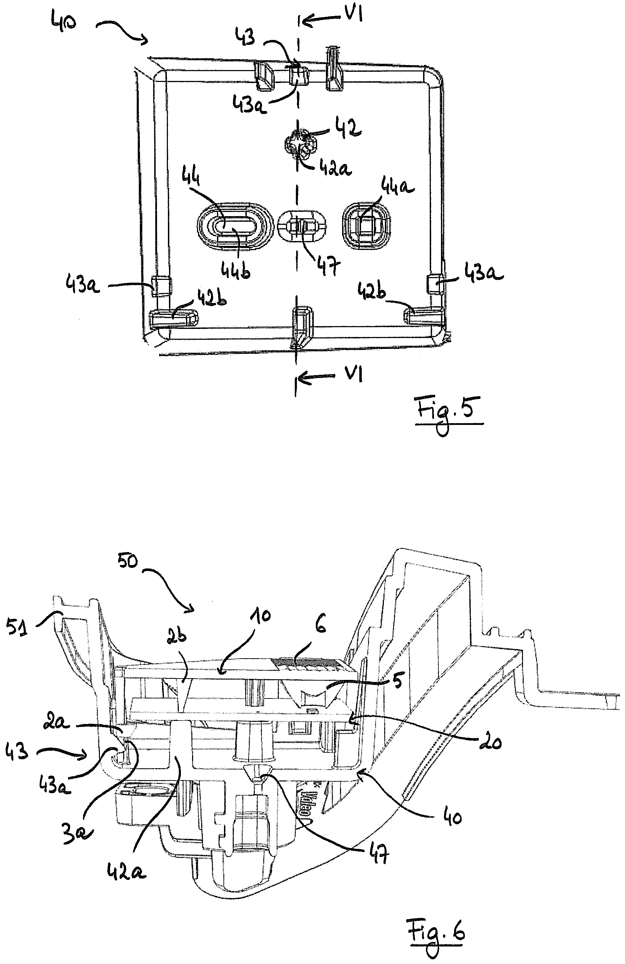

Ce module optique 30 est destiné à être inséré dans un logement 40 représenté à la figure 5.

En référence à la figure 2, la pièce optique 10 comporte une base 1. Cette base 1 est une plaque transparente monobloc comprenant une première face 12 et une deuxième face 13. La plaque a la forme d'un polygone et sa section transversale est rectangulaire. La pièce optique (10) est en polycarbonate (PC) ou en polyméthacrylate de méthyle (PMMA).

Une partie des moyens de maintien 2 du circuit imprimé 20 sur la pièce optique appelée butée de contre-appui 2b, et des moyens de positionnement 4 du circuit imprimé 20 et du logement 40 sont issus de la première face 12. Les butées de contre-appui 2b, les moyens de positionnement 4 et des moyens de fixation 3 du module optique sur le logement 40 s'étendent transversalement à la première face 12. La pièce optique 10 comporte en outre trois languettes 11 venues de matière avec la base 1 et s'étendant transversalement et à la périphérie de la base 1 dans le même sens que les butées de contre-appui 2b, les moyens de fixation 3 et les moyens de positionnement 4.

Les moyens de fixation 3 du module optique sur le logement sont insérés dans les languettes 11 et l'autre partie des moyens de maintien 2, appelés ergot de clippage 2a, est positionnée sur les languettes 11.

Les moyens de positionnement 4 sont des pions qui s'étendent transversalement à la première face 11 de la base 1 de la pièce optique 10. Deux pions identiques 4a, 4b s'étendent à partir de la première face 11 de la base1 de la pièce optique 10. Le circuit imprimé 20, représenté à la figure 4, s'étend dans un plan, et comporte des moyens de passage 24 sous la forme de trous venant coopérer avec les pions 4a, 4b à l'assemblage de la pièce optique 10 et du circuit imprimé 20. Au cours de l'assemblage, les pions 4a, 4b viennent s'insérer dans les moyens de passage 24, comme illustré à la figure 1.

Les moyens de passage 24 comprennent un trou circulaire 24a et un trou oblong 24b. Le trou circulaire 24a permet de bloquer le circuit imprimé 20, lorsqu'il est assemblé avec la pièce optique 10, selon deux axes orthogonaux contenu dans le plan dans lequel s'étend le circuit imprimé 20 et le trou oblong 24b permet de bloquer le circuit imprimé 20, lorsqu'il est assemblé avec la pièce optique 10, selon un axe, transversal à la direction dans laquelle s'étend le trou oblong et contenu dans le plan dans lequel s'étend le circuit imprimé.

Les moyens de maintien 2 comportent chacun un ergot de clippage 2a et une butée de contre-appui 2b.

Chaque ergot de clippage 2a est positionné sur une languette 11 et s'étend en saillie de cette languette, transversalement à celle-ci et vers la base 1. L'ergot de clippage 2a présente une forme de prisme avec une rampe qui facilite l'insertion du circuit imprimé 20 au cours de l'assemblage et qui permet de bloquer la translation du circuit imprimé 20 selon la direction normale au plan dans lequel s'étend le circuit imprimé 20 et dans le sens opposé au sens dans lequel le circuit imprimé 20 est inséré pour être assemblé avec la pièce optique 10.

Chaque butée de contre-appui 2b s'étend à partir de la première face 12 de la base 1 de la pièce optique 10 et est positionnée à proximité d'une languette 11 et de sorte que lorsque le circuit imprimé 20 est mis en position, elle ne se situe pas en contact de l'électronique positionné sur le circuit imprimé 20, notamment de l'électronique de pilotage non représenté sur les figures. Comme visible à la figure 2, deux butées de contre-appui 2b, appelée butées de contre-appui périphériques, sont positionnées à la périphérie de la pièce optique 10 et une butée de contre-appui 2b, appelée butée de contre-appui médiane, est positionnée sur un axe médian de la pièce optique 10. Les butées de contre-appui 2b sont ainsi réparties sur la surface de la première face 12 de la base 1 de la pièce optique 10. Les butées de contre-appui 2b viennent bloquer la translation du circuit imprimé 20 selon la direction transversale au plan dans lequel s'étend le circuit imprimé 20 et dans le sens dans lequel le circuit imprimé 20 est inséré pour être assemblé avec la pièce optique 10.

Pour chaque moyen de maintien 2, l'ergot de clippage 2a et la butée de contre-appui 2b viennent coopérer de sorte que le circuit imprimé 20 est maintenu entre l'ergot de clippage 2a et la butée de contre-appui 2b, ce qui limite, voire empêche les déplacements du circuit imprimé 20 une fois celui-ci assemblé avec la pièce optique 10.

Chaque languette 11, en plus de comporter un ergot de clippage 2a comporte un moyen de fixation 3. Le moyen de fixation 3 comporte une fenêtre 3a. Cette fenêtre 3a est un trou débouchant de forme rectangulaire. Cependant, cette forme n'est pas limitative et on pourrait imaginer d'autres formes possibles.

La pièce optique 10 comporte également des collimateurs 5 positionnés sur la première face 12 de la base 1 de la pièce optique 10. Chaque collimateur 5 est apparié avec une source lumineuse 25 positionnée sur le circuit imprimé 20 et visible à la figure 4. Ainsi, les faisceaux lumineux émis par chacune des sources lumineuses 25 sont collimatés par l'un des collimateurs 5. Dans l'exemple choisi, la pièce optique 10 comporte trois collimateurs 5, deux collimateurs périphériques et un collimateur central chacun associé à une des trois sources lumineuses 25 présentes sur le circuit imprimé 20.

A chacun des collimateurs 5 est également associée une série de cannelures 6 positionnée sur la deuxième face 13 de la base 1 de la pièce optique 10 et visibles sur la figure 3. Les cannelures 6 sont constituées par des surfaces profilées à profil en arc de cercle et définissant des secteurs cylindriques. Les cannelures 6 ont la même forme et les mêmes dimensions entre elles. Toutefois, la direction dans laquelle s'étendent les différentes séries de cannelures 6 n'est pas identique d'une série à l'autre. Ainsi, les cannelures 6 de la série de cannelures associée au collimateur central sont transversales aux cannelures 6 des séries de cannelures associées respectivement aux collimateurs périphériques. Cela permet d'assurer que le flux émis soit diffusé dans des directions orthogonales de sorte à faciliter le respect de la photométrie réglementaire du dispositif lumineux.

Une fois le module optique 30 assemblé, celui-ci est inséré dans un logement 40 représenté à la figure 5. Le logement 40 est en polymère synthétique tel que du polypropylène ou du polycarbonate. Le logement 40 comporte des moyens de positionnement complémentaires 44. Ces moyens de positionnement complémentaires 44 sont formés par une cavité de contour circulaire 44a et une cavité de contour oblong 44b. Ces cavités 44a, 44b permettent de recevoir les moyens de positionnement 4 issus de la pièce optique 10 et traversant le circuit imprimé 20 au travers des moyens de passage 24. Lorsque le module optique 30 est inséré dans le logement, les cavités sont donc alignées avec les moyens de passage 24 selon l'axe transversal au plan du circuit imprimé de sorte à ce que les pions 4a, 4b issus de la pièce optique 10 puissent traverser les moyens de passage 24 du circuit imprimé 20 et s'insérer dans les cavités 44a, 44b du logement 40. Ainsi, le circuit imprimé 20 et la pièce optique 10 sont positionnés relativement l'un par rapport à l'autre pour former le module optique 30, et, le module optique 30 est positionné dans le logement 40.

Le logement 40 comporte aussi des moyens de fixation complémentaires 43. Ces moyens de fixation complémentaires 43 sont des clips 43a viennent s'insérer dans les fenêtres 3a formées dans les languettes 11 de la pièce optique 10 lors de l'assemblage du module optique 30 dans le logement 40. La coopération entre les clips 43a et les fenêtres 3a permet de maintenir le module optique 30 dans le logement 40.

Le logement 40 comporte également des entretoises 42 issues du fond du logement 40 et qui viennent supporter le circuit imprimé 20 sur la face opposée à la face où sont positionnées les sources lumineuses 25, lorsque le module optique 30 est inséré dans le logement 40. Trois entretoises 42 sont issues du fond du logement 40, deux entretoises périphériques 42b sont situées à la périphérie du logement 40 et une entretoise médiane 42a est située sur un axe médian du logement 40.

Lorsque le module optique 30 est inséré dans le logement 40, la butée de contre-appui médiane et l'entretoise médiane 42a sont alignées selon la direction dans laquelle elles s'étendent, et, les butées de contre-appui périphériques et les entretoises périphériques 42b sont alignées. L'alignement des butées de contre-appui 2b et des entretoises 42 permet de former des points d'appui entre le module optique 30 et le logement 40 lors de leur assemblage, ce qui permet d'éviter de déformer le circuit imprimé 20 et la pièce optique 10 lorsqu'ils sont insérés dans le logement 40.

Le logement 40 comporte également un moyen de montage de connecteur 47 ou d'interface électronique pour relier électriquement des conducteurs ou fiches du circuit imprimé à des moyens de commande du véhicule automobile. Des moyens d'arrivée de connexion 27, visibles à la figure 4, sont également prévus dans le circuit imprimé 20. Ce sont des trous permettant de faire passer des fils issus du connecteur et permettant de venir alimenter l'électronique de pilotage, non représenté sur les figures, du dispositif lumineux 50.

La figure 6 représente une vue en coup du dispositif lumineux 50 lorsque le module optique 30 a été inséré dans le logement 40, selon un plan passant par l'axe VI-VI représenté à la figure 5. Le logement 40 du dispositif lumineux 50 est fermé par une glace de fermeture qui n'est pas représentée sur les figures. Au moins une partie de la glace de fermeture est transparente afin de laisser passer la lumière issue du module optique. Sur cette coupe, on peut voir la coopération entre un ergot de clippage 2a et une butée de contre appui 2b qui viennent de part et d'autre du circuit imprimé 20 afin de le maintenir en position, l'alignement de la butée de contre-appui 2b médiane et de l'entretoise médiane 42a est également visible. Et, on voit également un des clips 43a inséré dans une fenêtre 3a d'une languette 11 de la pièce optique 10, ainsi que le moyen de montage de connecteur 47.

Le logement 40 est ici aménagé dans la paroi d'un boitier 51. Les entretoises 42, les moyens de fixation complémentaires 43 et les moyens de positionnement complémentaires 44 sont issus du logement 40.

Le dispositif lumineux 50 ainsi assemblé permet notamment de réaliser une fonction de feu antibrouillard ou une fonction de feu de recul.

Alternativement, le dispositif lumineux 50 pourrait présenter deux logements 40 dans la paroi du boitier 51 permettant chacun de loger un module optique 30 identique à celui précédemment décrit, l'un permettant de réaliser un fonction de feu antibrouillard et l'autre permettant de réaliser une fonction de feu de recul ; ou l'un permettant de réaliser une partie seulement de l'une quelconque des fonctions feu antibrouillard et feu de recul et l'autre venant compléter la réalisation de la fonction réalisée par le premier module optique.

## Revendications

1. Dispositif lumineux (50) de véhicule automobile comprenant un logement (40) et un module optique (30), le module optique (30) comportant un circuit imprimé (20) supportant au moins une source lumineuse (25) sur une de ses faces et une pièce optique (10) destinée à mettre en forme les faisceaux lumineux issus de la source lumineuse (25),
tel que la pièce optique (10) comporte des moyens de maintien (2) du circuit imprimé (20) sur la pièce optique (10), des moyens de fixation (3) du module optique (30) sur le logement (40) et des moyens de positionnement (4) du circuit imprimé (20) sur la pièce optique et de la pièce optique sur le logement (40),
tel que le logement (40) comporte des moyens de positionnement complémentaires (44) coopérant avec les moyens de positionnement (4) permettant de positionner le module optique (30) sur le logement (40), des moyens de fixation complémentaires (43) coopérant avec les moyens de fixation (3) et des entretoises (42) venant supporter le circuit imprimée (20) sur la face opposée à celle où est positionnée ladite au moins une source lumineuse (25),
**caractérisé en ce que** le circuit imprimé (20) comporte des moyens de passage (24) coopérant avec les moyens de positionnement (4), lesdits moyens de passage comprenant un trou circulaire (24a) et un trou oblong (24b).

2. Dispositif lumineux (50) de véhicule automobile selon la revendication précédente, **caractérisé en ce que** la pièce optique (10) comporte une base (1) transparente monobloc, les moyens de maintien (2), les moyens de fixation et les moyens de positionnement (4) s'étendant transversalement à partir d'une même première face (12) de cette base (1).

3. Dispositif lumineux (50) de véhicule automobile selon l'une des revendications précédentes, **caractérisé en ce que** les moyens de positionnement complémentaires (44) sont des cavités aptes à recevoir les moyens de positionnement (4).

4. Dispositif lumineux (50) de véhicule automobile selon la revendication précédente, **caractérisé en ce que** les moyens de positionnement complémentaires (44) comportent une cavité de contour circulaire ou carré (44a) et une cavité de contour oblong (44b).

5. Dispositif lumineux (50) de véhicule automobile selon l'une quelconque des revendications précédentes, **caractérisé en ce que** les moyens de maintien (2) comportent au moins un ergot de clippage (2a) qui vient au contact du circuit imprimé (20) sur la face opposée à la face où est positionnée la au moins une source lumineuse (25).

6. Dispositif lumineux (50) de véhicule automobile selon l'une des revendications précédentes, **caractérisé en ce que** les moyens de maintien (2) comportent au moins une butée de contre-appui (2b) venant supporter le circuit imprimé (20) sur la face où est positionnée la au moins une source lumineuse (25).

7. Dispositif lumineux (50) de véhicule automobile selon l'une des revendications précédentes, **caractérisé en ce que** le logement (40) comporte une entretoise médiane (42a) positionnée sur un axe médian du logement (40), et deux entretoises périphériques (42b) positionnées à la périphérie du logement (40).

8. Dispositif lumineux (50) de véhicule automobile selon l'une des revendications précédentes, **caractérisé en ce que** les moyens de fixation (3) comprennent une fenêtre (3a) et **en ce que** les moyens de fixation complémentaires (43) comprennent un clip agencé (43a) pour s'insérer dans la fenêtre (3a) des moyens de fixation (3).

9. Dispositif lumineux (50) de véhicule automobile selon l'une des revendications 2 à 8, **caractérisé en ce que** la pièce optique (10) comporte un collimateur (5) positionné sur la première face (12) de la base (1) apparié avec chacune des au moins une source lumineuse (25).

10. Dispositif lumineux de véhicule automobile selon la revendication 9, **caractérisé en ce que** la pièce optique (10) comporte une série de motifs appariée à chacun des collimateurs (5), positionnée sur une deuxième face (13) de la base (1) opposée à ladite première face (12) et apte à répartir les faisceaux lumineux issus de ladite au moins une source lumineuse (25).

11. Dispositif lumineux (50) de véhicule automobile selon l'une des revendications précédentes, **caractérisé en ce que** le logement (40) comporte un moyen de montage de connecteur (47) ou d'interface électronique pour relier électriquement des conducteurs ou fiches du circuit imprimé (20) au moyen de commande du véhicule automobile.

12. Dispositif lumineux selon la revendication 11, **caractérisé en ce qu'**il comporte un boitier (51) et une glace de fermeture, le logement (40) est une pièce fixée sur le boitier (51) ou est aménagé dans la paroi du boitier (51).

13. Dispositif lumineux (50) selon l'une quelconque des revendications précédentes, **caractérisé en ce qu'**il comporte au moins deux logements (40) recevant chacun un module optique (30).

14. Dispositif lumineux (50) selon l'une quelconque des revendications précédentes, **caractérisé en ce qu'**il réalise une fonction de feu antibrouillard et/ou une fonction de feu de recul.

## Patentansprüche

1. Lichtvorrichtung (50) für ein Kraftfahrzeug umfassend eine Aufnahme (40) und ein optisches Modul (30), wobei das optische Modul (30) eine Leiterplatte (20), die wenigstens eine Lichtquelle (25) auf einer ihrer Seiten trägt, und ein optisches Teil (10) aufweist, das dazu bestimmt ist, die Lichtbündel aus der Lichtquelle (25) zu formen, etwa weist das optische Teil (10) Mittel zum Halten (2) der Leiterplatte (20) auf dem optischen Teil (10), Mittel zur Befestigung (3) des optischen Moduls (30) auf der Aufnahme (40) und Mittel zur Positionierung (4) der Leiterplatte (20) auf dem optischen Teil und des optischen Teils auf der Aufnahme (40) auf, etwa weist die Aufnahme (40) ergänzende Positionierungsmittel (44) auf, die mit den Positionierungsmitteln (4) zusammenwirken, die es gestatten, das optische Modul (30) auf der Aufnahme (40) zu positionieren, wobei ergänzende Befestigungsmittel (43) mit den Befestigungsmitteln (3) zusammenwirken und Abstandshalter (42) die Leiterplatte (20) auf der Seite tragen, die jener gegenüberliegt, wo die wenigstens eine Lichtquelle (25) positioniert ist, **dadurch gekennzeichnet, dass** die Leiterplatte (20) Durchgangsmittel (24) aufweist, die mit den Positionierungsmitteln (4) zusammenwirken, wobei die Durchgangsmittel ein kreisförmiges Loch (24a) und ein Langloch (24b) aufweisen.

2. Lichtvorrichtung (50) für ein Kraftfahrzeug nach dem vorhergehenden Anspruch, **dadurch gekennzeichnet, dass** das optische Teil (10) eine einstückige transparente Basis (1) aufweist, wobei sich die Haltemittel (2), die Befestigungsmittel und die Positionierungsmittel (4) von ein und derselben ersten Seite (12) dieser Basis (1) in Querrichtung erstrecken.

3. Lichtvorrichtung (50) für ein Kraftfahrzeug nach einem der vorhergehenden Ansprüche, **dadurch gekennzeichnet, dass** die ergänzenden Positionierungsmittel (44) Vertiefungen sind, die geeignet sind, die Positionierungsmittel (4) aufzunehmen.

4. Lichtvorrichtung (50) für ein Kraftfahrzeug nach dem vorhergehenden Anspruch, **dadurch gekennzeichnet, dass** die ergänzenden Positionierungsmittel (44) eine Vertiefung mit kreisförmiger oder quadratischer Kontur (44a) und eine Vertiefung mit länglicher Kontur (44b) aufweisen.

5. Lichtvorrichtung (50) für ein Kraftfahrzeug nach einem der vorhergehenden Ansprüche, **dadurch gekennzeichnet, dass** die Haltemittel (2) wenigstens eine Rastnase (2a) aufweisen, die mit der Leiterplatte (20) auf der Seite in Kontakt tritt, die der Seite gegenüberliegt, wo die wenigstens eine Lichtquelle (25) positioniert ist.

6. Lichtvorrichtung (50) für ein Kraftfahrzeug nach einem der vorhergehenden Ansprüche, **dadurch gekennzeichnet, dass** die Haltemittel (2) wenigstens einen Gegendruckanschlag (2b) aufweisen, der die Leiterplatte (20) auf der Seite trägt, wo die wenigstens eine Lichtquelle (25) positioniert ist.

7. Lichtvorrichtung (50) für ein Kraftfahrzeug nach einem der vorhergehenden Ansprüche, **dadurch gekennzeichnet, dass** die Aufnahme (40) einen mittleren Abstandshalter (42a), der auf einer Mittelachse der Aufnahme (40) positioniert ist, und zwei Randabstandshalter (42b) aufweist, die am Rand der Aufnahme (40) positioniert sind.

8. Lichtvorrichtung (50) für ein Kraftfahrzeug nach einem der vorhergehenden Ansprüche, **dadurch gekennzeichnet, dass** die Befestigungsmittel (3) ein Fenster (3a) umfassen, und dadurch, dass die ergänzenden Befestigungsmittel (43) einen Clip umfassen, der dafür angeordnet ist (43a), sich in das Fenster (3a) der Befestigungsmittel (3) einzufügen.

9. Lichtvorrichtung (50) für ein Kraftfahrzeug nach einem der Ansprüche 2 bis 8, **dadurch gekennzeichnet, dass** das optische Teil (10) einen Kollimator (5) aufweist, der auf der ersten Seite (12) der Basis (1) positioniert ist, der jeder der wenigstens einen Lichtquelle (25) paarweise zugeordnet ist.

10. Lichtvorrichtung für ein Kraftfahrzeug nach Anspruch 9, **dadurch gekennzeichnet, dass** das optische Teil (10) eine Reihe von Mustern aufweist, die jedem der Kollimatoren (5) paarweise zugeordnet ist, die auf einer zweiten Seite (13) der Basis (1) positioniert ist, die der ersten Seite (12) gegenüberliegt und geeignet ist, die Lichtbündel aus der wenigstens einen Lichtquelle (25) zu verteilen.

11. Lichtvorrichtung (50) für ein Kraftfahrzeug nach einem der vorhergehenden Ansprüche, **dadurch gekennzeichnet, dass** die Aufnahme (40) ein Mittel zur Anbringung eines Konnektors (47) oder einer elektronischen Schnittstelle aufweist, um Leiter oder Stecker der Leiterplatte (20) mit dem Steuermittel des Kraftfahrzeugs elektrisch zu verbinden.

12. Lichtvorrichtung nach Anspruch 11, **dadurch gekennzeichnet, dass** sie ein Gehäuse (51) und eine Verschlussscheibe aufweist, wobei die Aufnahme (40) ein Teil ist, das auf dem Gehäuse (51) befestigt oder in der Wand des Gehäuses (51) angeordnet ist.

13. Lichtvorrichtung (50) nach einem der vorhergehenden Ansprüche, **dadurch gekennzeichnet, dass** sie wenigstens zwei Aufnahmen (40) aufweist, die jeweils ein optisches Modul (30) aufnehmen.

14. Lichtvorrichtung (50) nach einem der vorhergehenden Ansprüche, **dadurch gekennzeichnet, dass** sie eine Nebelleuchtenfunktion und/oder eine Rückfahrleuchtenfunktion ausübt.

## Claims

1. Lighting device (50) for a motor vehicle, comprising a housing space (40) and an optical module (30), the optical module (30) comprising a printed circuit (20) supporting at least one light source (25) on one of its faces and an optical component (10) intended to shape the light beams emanating from the light source (25), such that the optical component (10) comprises retaining means (2) for holding the printed circuit (20) on the optical component (10), fixing means (3) for fixing the optical module (30) on the housing space (40) and positioning means (4) for positioning the printed circuit (20) on the optical component and the optical component on the housing space (40), such that the housing space (40) comprises complementary positioning means (44) collaborating with the positioning means (4) allowing the positioning of the optical module (30) on the housing space (40), complementary fixing means (43) collaborating with the fixing means (3) and spacers (42) supporting the printed circuit (20) on the opposite face to the one on which said at least one light source (25) is positioned, **characterized in that** the printed circuit (20) comprises passage means (24) collaborating with the positioning means (4), said passage means comprising a circular hole (24a) and an oblong hole (24b).

2. Lighting device (50) for a motor vehicle according to the preceding claim, **characterized in that** the optical component (10) comprises a one-piece transparent base (1), the retaining means (2), the fixing means and the positioning means (4) extending transversely from the one same first face (12) of this base (1).

3. Lighting device (50) for a motor vehicle according to one of the preceding claims, **characterized in that** the complementary positioning means (44) are cavities able to accept the positioning means (4).

4. Lighting device (50) for a motor vehicle according to the preceding claim, **characterized in that** the complementary positioning means (44) comprise a cavity of circular or square contour (44a) and a cavity of oblong contour (44b).

5. Lighting device (50) for a motor vehicle according to any one of the preceding claims, **characterized in that** the retaining means (2) comprise at least one clip-fastening stud (2a) which comes into contact with the printing circuit (20) on the opposite face to the face on which the at least one light source (25) is positioned.

6. Lighting device (50) for a motor vehicle according to one of the preceding claims, **characterized in that** the retaining means (2) comprise at least one back stop (2b) supporting the printed circuit (20) on the face on which the at least one light source (25) is positioned.

7. Lighting device (50) for a motor vehicle according to one of the preceding claims, **characterized in that** the housing space (40) comprises a middle spacer (42a) positioned on a middle axis of the housing space (40), and two peripheral spaces (42b) positioned at the periphery of the housing space (40) .

8. Lighting device (50) for a motor vehicle, according to one of the preceding claims, **characterized in that** the fixing means (3) comprise an opening (3a) and **in that** the complementary fixing means (43) comprise a clip (43a) designed to be inserted into the window (3a) of the fixing means (3).

9. Lighting device (50) for a motor vehicle according to one of Claims 2 to 8, **characterized in that** the optical component (10) comprises a collimator (5) positioned on the first face (12) of the base (1) paired with each of the at least one light sources (25) .

10. Lighting device for a motor vehicle according to Claim 9, **characterized in that** the optical component (10) comprises a series of patterns which is paired with each of the collimators (5) and positioned on a second face (13) of the base (1) opposite to said first face (12) and able to distribute the light beams emanating from said at least one light source (25) .

11. Lighting device (50) for a motor vehicle according to one of the preceding claims, **characterized in that** the housing space (40) comprises a means for mounting an electronic interface or connector (47) for electrically connecting conductors or plugs of the printed circuit (20) to the control means of the motor vehicle.

12. Lighting device according to Claim 11, **characterized in that** it comprises a housing (51) and a closing outer lens, the housing space (40) is a component attached to the housing (51) or is formed in the wall of the housing (51).

13. Lighting device (50) according to any one of the preceding claims, **characterized in that** it comprises at least two housing spaces (40) each accepting an optical module (30).

14. Lighting device (50) according to any one of the preceding claims, **characterized in that** it performs a fog light function and/or a reversing light function.
